Europäisches Patentamt

European Patent Office

Office européen des brevets

(11) Publication number: **0 187 966**
**B1**

(12) **EUROPEAN PATENT SPECIFICATION**

(45) Date of publication of patent specification: **31.10.90**

(21) Application number: **85115887.3**

(22) Date of filing: **12.12.85**

(51) Int. Cl.⁵: **C 09 K 5/06**

(54) **Heating apparatus having a heat storage device.**

(30) Priority: **18.12.84 JP 266658/84**
**18.12.84 JP 266659/84**
**28.01.85 JP 13713/85**
**19.03.85 JP 54923/85**
**19.03.85 JP 54924/85**

(43) Date of publication of application:
**23.07.86 Bulletin 86/30**

(45) Publication of the grant of the patent:
**31.10.90 Bulletin 90/44**

(84) Designated Contracting States:
**DE FR GB**

(56) References cited:
**WO-A-86/00219      FR-A-2 376 893**
**FR-A-2 168 126      US-A-1 379 721**

**PATENTS ABSTRACTS OF JAPAN, vol. 8, no.**
**246 (C-251) 1683r, 10th November 1984; & JP - A**
**- 59 124 979 (KOUEI KAGAKU KOGYO K.K.)**
**19-07-1984**

**PATENTS ABSTRACTS OF JAPAN, vol. 6, no.**
**180 (C-125) 1058r, 14th September 1982; & JP -**
**A - 57 96 078 (MATSUSHITA DENKI SANGYO**
**K.K.) 15-06-1982**

(73) Proprietor: **MATSUSHITA ELECTRIC**
**INDUSTRIAL CO., LTD.**
**1006, Oaza Kadoma**
**Kadoma-shi, Osaka-fu, 571 (JP)**

(72) Inventor: **Yabuuchi, Hidetaka**
**11-14, Isoshi 3-chome**
**Takarazuka City, 665 (JP)**
Inventor: **Endo, Yoshiyasu**
**16-3, Nagisa-sakae-machi**
**Hirakata City, 573 (JP)**
Inventor: **Kataoka, Akira**
**A-207, 15, Niina 5-chome**
**Minoo City, 562 (JP)**
Inventor: **Shibata, Tsuneo**
**3-44, Suimeidai 3-chome**
**Kawanishi City, 666-01 (JP)**

(74) Representative: **Dr. Elisabeth Jung Dr. Jürgen**
**Schirdewahn Dipl.-Ing. Claus Gernhardt**
**P.O. Box 40 14 68 Clemensstrasse 30**
**D-8000 München 40 (DE)**

EP 0 187 966 B1

## Description

The present invention relates to a heating apparatus which has a heat storage device and is usable without electric cord.

Heretofore, an attempt has been made to attain improvement in the heating characteristics of such heating apparatuses as hot plates, electric irons, etc., preventing quick cooling of the heating surface during their practical use. For this purpose a heat storage function was added to them. Furthermore an attempt has been made to achieve enhancement in their operational facility through the possibility of the so-called cordless operation, that is, by making the apparatus operable for a certain time period, while being isolated from a power source.

In the conventional art the addition of the heat storage function to the heating apparatuses of this type is accomplished by increasing their heat capacity due to their specific heat. The latter is increased by increasing the weight of their heating base and they are usually provided with heat storage substances which have latent heats at specified temperatures.

The heat storage substances used in these heating apparatuses need to be capable of storing and discharging heat within a temperature range of 150—250°C and especially to have a high safety margin, for its environment of use is often the household. The present inventors, as a result of examination of many types of materials, focused their attention to pentaerythritol as the heat storage material for this purpose. Pentaerythritol has its crystal transition point at 188°C, its latent heat of transition is as large as about 300 j/g, and pentaerythritol itself is widely used in large amounts as raw material of resins and paints, and therefore is readily available.

But although belonging to a type of compounds which is relatively stable under heating, pentaerythritol is known to gradually lose heat storage capacity due to degradation from oxidation, when exposed to high temperature in air for a long time, and it has been demonstrated that particularly at such high temperatures as above 200°C even in a closed system isolated from ambient air the presence in the system of substances incompatible with pentaerythritol likewise results in loss of the heat storage capacity.

Thus an examination for compatibility of pentaerythritol with various materials has revealed the fact that a notable reduction in its heat storage capacity is apparent, especially when pentaerythritol is heated for a long time in contact with metal.

Generally, the housing which contains the heat storage substance is normally composed of metal in order to ensure high heat resistance, high thermal conductivity and mass production capacity, etc. The aforementioned results point to the inadequacy of metal for the housing which contains pentaerythritol in view of the adverse effect on its durability, thus raising a problem in practical application of pentaerythritol as a heat storage substance.

Another problem consists in that if pentaerythritol is completely enclosed in a housing for prevention of its deterioration from oxygen, as above described, its degradation still occurs after use for a long period, even though the housing is composed of a nonmetal substance which is highly compatible with this material. The gas formed by the decomposition gradually accumulates inside the housing and involves the hazard that internal pressure in the housing will continue to rise.

In order to overcome these disadvantages, the Japanese Patent Publication A-59 124 979 (Patents Abstracts of Japan, Vol. 8, No. 246 (C-251) [1683] of November 10, 1984) teaches that in order to provide a thermal energy storage material with excellent heat stability, the impurities in pentaerythritol must be controlled such that it contains less than 1% in total of dipentaerythritol and bispentaerythritol monoformal, less than 60 ppm sodium formate and less than 2 ppm calcium formate. A material with such a high purity, however, is rather expensive.

Object and summary of the invention

The present invention is intended to solve the aforementioned problems and has as its object a highly safe heating apparatus in which no accelerated deterioration of pentaerythritol will take place, even when being contained in a metal housing, ensuring its durability over a long time and moreover, which dismisses with the fear of causing internal pressure rise even during long periods of use.

The heating apparatus with a heat storage device and a heating element according to the invention comprises:

(A) a metal body provided with a housing wherein is located a heat storage device consisting of

(a) a heat decomposable heat storage substance comprising 30—99% by weight of pentaerythritol and 70—1% by weight of a composition comprising

(1) a polymer in an amount of less than 70% by weight comprising at least one member selected from the group consisting of olefinic polymers and fluorine-resin polymers, and

(2) a petroleum wax having a carbon number of at least 16 in an amount of less than 70% by weight,

(b) a container made of fluororesin material completely enclosing said heat storage substance, isolating it from said metal body and preventing contact of it with ambient air, whereby said container of fluororesin is permeable to the gases due to decomposition of said heat storage substance during use of the apparatus, and

(B) a heating element incorporated in said metal body.

When such a construction is adopted, the fluororesin which is inert to pentaerythritol not only prevents the contact with the material of the housing surface thereby preventing reduction in the heat storage capacity of pentaerythritol, but even during long-period use, there is no fear of an abnormal rising of the internal pressure, because the decomposition gas gradually is discharged thanks to the proper permeability of the fluororesin. Therefore a heating apparatus having a heat storage function and a guaranteed safety and long life may be realized.

Preferred representatives for use as the aforementioned olefinic polymers are ethylene polymers, proplylene polymers, and methylene polymers. As fluorine-resin polymers there are preferred tetrafluoroethylene polymers, tetrafluoroethylene-perfluoralkyl vinyl ether copolymers, tetrafluoroethylene-hexafluoropropylene copolymers, tetrafluoroethylene-ethylene copolymers and vinylidene fluoride polymers.

Further, as petroleum wax there are preferred paraffin waxes, microcrystalline waxes and petroleum, each having a carbon number of at least 16.

Moreover, it is preferable to have a silicone interposed between the aforementioned container and the housing.

Furthermore, it is preferable to form a vaporizing chamber in the housing cover.

According to a further preferred embodiment the housing includes an internal bottom surface and a top opening closed by a removable housing cover, and

a plurality of flat plate-shaped heat storage elements each having a heat storage substance enclosed in a container made of fluororesin film which storage elements are securely held between and in contact with said internal bottom surface and the inner face of said cover.

Furthermore, preferably the aforementioned heat storage elements are stacked and at least one heat transferring plate is indirect or by means of a heat conductive material in direct thermal contact with at least one of the base and the housing cover which heat transferring plate is provided between respective heat storage elements.

Moreover, according to a preferred embodiment the container is formed in an undulated shape and is securely pinched between and in contact with the housing and the housing cover which mate with the undulations of the container.

Furthermore, preferably the housing has an opening with a peripheral rim and the container comprises a fluororesin coating formed on the inside surface of said housing and the housing includes a removable housing cover mounted on said rim to seal said opening.

Finally, in the embodiment as described in the foregoing paragraph, the fluoresin coating preferably is formed on at least the part of the aforementioned housing cover which abuts on the opening peripheral rim of the housing.

Brief description of the drawing

Fig. 1 is a sectional view of a heating apparatus having a heat storage device embodying the present invention.

Fig. 2 is a characteristic graph showing compatibilities of pentaerythritol with various types of heat-resistant resins.

Fig. 3 is a characteristic chart showing gas permeabilities of the resins.

Fig. 4 is a sectional view of a heating apparatus having a heat storage device according to a second embodiment of the present invention.

Fig. 5 is a sectional view of the essential part of a third embodiment in which the heating apparatus having a heat storage device of the present invention is applied to an electric iron.

Fig. 6 is a partly broken sectional view of the electric iron.

Fig. 7 is a disassembled perspective view of the electric iron.

Fig. 8 is a sectional view of a heat storage element being in the step of its manufacture wherein this invention is embodied.

Fig. 9 is a sectional view of the essential part of the fourth embodiment wherein the heating apparatus having a heat storage device of the present invention is applied to an electric iron.

Fig. 10 is a partly broken sectional view of the electric iron.

Fig. 11 is a disassembled perspective view of the essential part of the heat storage device used in the electric iron.

Figs. 12 and 13 are sectional views of heating apparatuses having a heat storage device of the fifth and sixth embodiment of the present invention.

Description of the preferred embodiments

In the following, embodiments in accordance with the present invention are described with reference to the accompanying drawings:

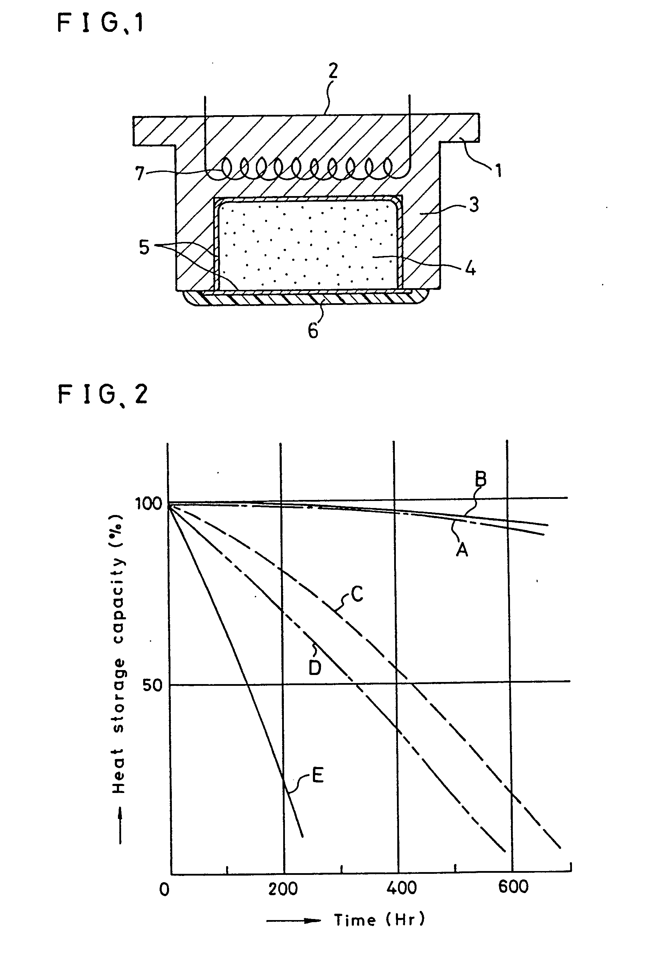

Fig. 1 shows a heating apparatus having a heat storage device embodying this invention. In this figure, a metal base 1 has a heating surface 2 at its top part and a housing 3 at the lower part. A heat storage substance comprising pentaerythritol as its main ingredient is contained in a container 5 made of a fluororesin which is provided in the housing 3. A sheet 6 of silicone rubber is provided for securing the container 5 located in the housing 3. The silicone rubber sheet is formed by applying liquid silicone rubber on the opening of the housing 3 in such a way as to coat it and subsequently set. A heating element 7 for heating the substance 4 is installed in a part of the base 1 above the housing 3. Since the substance 4 is hermetically sealed in the container 5, the substance 4 is not exposed to air. Since the container 5 is formed of the fluororesin which is inert to the substance 4 so as to isolate substance 4 from the housing 3, it prevents the substance 4 from direct contact with the housing; therefore, the heat storage capacity of the substance 4 will not be degraded by contact with metal, even if the substance 4 continues to be heated for a long time at temperatures higher than its heat storage temperature.

Fig. 2 illustrates experimental results indicating that only a fluororesin, when compared with various types of heat-resistant resins, is inert to pentaerythritol. The method of the experiment comprises sealing pentaerythritol and a test piece of each heat resistant resin in respective glass tubes, then subjecting them to a continuous heating test at a temperature of 220°C, and measuring the changes of the heat storage capacity of each sample. In this graph, curve A illustrates a case wherein the tube only pentaerythritol is enclosed; curve B is for a case wherein in the tube pentaerythritol is mixed with fluororesin (PTFE); curve C is for a case wherein the pentaerythritol is mixed with an epoxy resin; curve D is for a case wherein the pentaerythritol is mixed with a polyimide resin; and curve E is for a case wherein the pentaerythritol is mixed with a polyamide resin (nylon 66). All resins other than the fluororesin of curve B, being poorly compatible with pentaerythritol, caused a reduction in its heat storage capacity. Especially three types of fluororesins, i.e. PFTE (tetrafluoroethylene resin), PFE (tetrafluoroethylene-perfluoroalkyl vinyl ether copolymer resin) and FEP (tetrafluoroethylene hexafluoropropylene copolymer resin) which gives high thermal resistance temperatures, have been found suitable as materials for the container 5.

Furthermore, as compared with other resins, fluororesins show high gas permeabilities, and even when the container 5 is completely enclosed by way of welding, the gas generated in the container 5 is gradually discharged. Accordingly, even if deterioration of the heat storage substance 4 has advanced after a long period of use, the internal pressure of the container 5 will not increase abnormally.

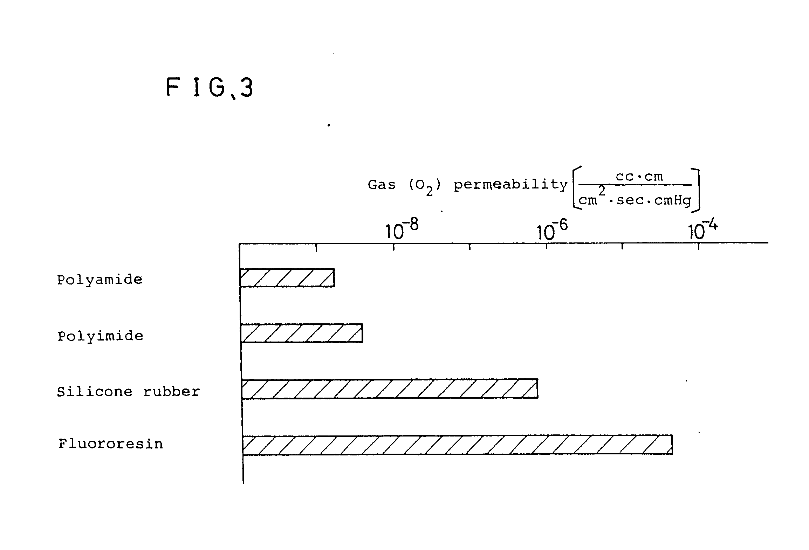

Fig. 3 shows the gas permeabilities of different resins. The graph reveals that the fluororesin provides a high gas permeability, thus testifying its high gas transmitting property. Rubber generally gives high permeability and silicone rubber is no exception, its gas permeability being very high.

Accordingly, even if the container 5 for the heat storage substance 5 is covered with a sheet of silicone rubber and secured in the housing as in this embodiment, not only the gas permeability between this container 5 inside the housing and ambient air may be maintained, but also various degrees of gas permeability are obtainable by altering the thickness of the silicone rubber 6 in correspondence with the size of the opening of the housing 3.

Next, the heat storage substance 4 is explained: this substance 4 is prepared by mixing less than 70 weight % of at least one olefinic polymer and/or fluorine-resin polymer and/or less than 70 weight % of petroleum waxes having a carbon number of at least 16 (provided that the total amount of these mixing components falls within a range of more than 1 but less than 70 weight %) with 30—99 weight % of pentaerythritol; it is manufactured by heating, when mixing them, at temperatures higher than the melting points of the petroleum waxes.

Generally, the pentaerythritol of industrial grade contains mixed therein dipentaerythritol and bispentaerythritol monoformal condensate, both being a reaction-by-product in synthesis, and salts of organic acids which are used as synthetic catalysts, these salts being formed as neutralization products with sodium hydroxide, potassium hydroxide, etc. For this reason, the melting point of pentaerythritol is essentially lower than 260°C which is its intrinsic value (for example, the melting point is about 200°C when the pentaerythritol content is around 95 weight %). Therefore, hitherto pentaerythritol is not only molten by heating it near its phase transition temperature, but also when it is intended to be used as a heat storage substance by being held at temperatures above its phase transition temperature for a long time; then its decomposition proceeds within a short period, and hence, its heat storage property is lost. By coating the surface part of the pentaerythritol crystal particles with the olefinic polymer or fluorine-resin polymer and the petroleum wax during the heating to above its phase transition temperature, it is possible to selectively eliminate from the surfaces of its crystal grains interfering factors. Such factors induce or accelerate decomposition of deposited reaction-by-products which are inevitably produced during the manufacture of pentaerythritol, oxygen and dust in the air, rust generated on the container walls with which the crystal particles come into contact and components migrating and bleeding out from the container material. Furthermore, the pentaerythritol is given the capacity of being isolated from such factors thereby allowing the coating material to be maintained in a stable state for a long time without having any adverse effects on pentaerythritol. Besides, since its shape holding property is improved through mixing the pentaerythritol with such materials as above described, it permits easy forming with press, etc., and moreover, the mixture of pentaerythritol with the other materials mentioned can easily be filled into containers of various shapes.

[Example-A]

Novatek L (Trade name of a low-density polyethylene resin, manufactured by Mitsubishi Chemical Industries, Ltd.) was used as a low-density ethylene polymer, which was pulverized to have 1—10 µm particle diameters and Pentalit M (Trade name of Pentaerythritol manufactured by Koei Chemical Co., Ltd., total amount of dipentaerythritol and bispentaerythritol condensate is 0.6 weight %) are mixed at different weight ratios for 100 weight parts of the total mixture (see Experiment Nos. 1 to 7 in Table 1).

The individual samples were put in separate glass beakers and vigorously stirred while heating at

4

150°C from outside, and the resultant crystal grain surface of the pentaerythritol was thereby subjected to a coating treatment with ethylene polymer. After cooling each sample, 10 g of it was taken and pressed at a pressure of 700 kg/cm² to form a plate 40 mm in diameter. The plate was set on a petri dish having an inside diameter of 40 mm and made of glass. A single liquid thermosetting silicone rubber was applied to the gap or clearance part between the plate and the glass cover, and was then heated at 150°C for 30 minutes to be set, thus effecting hermetic sealing; in that way, samples for long heating stability tests were manufactured. In addition, pentaerythritol alone was treated as above described, thereby forming Comparison sample-1. The samples for the long heating stability test formed in this way were used for obtaining distinctive evidence of the stability difference under heating as compared with the sample having only pentaerythritol sealed therein. Since the petri dish is used as it is without being cleaned, minute amounts of some foreign matters, like dust, are deposited on it and because its material is soda glass, minute amounts of free sodium ion, etc., are present. Besides, because of the use of dies when pressing pentaerythritol at a pressure of 700 kg/cm², deposition of rust, etc., on the surface of the pressed heat storage substance inevitably takes place. When this sample is put on the aforementioned petri dish and the clearance part produced thereby is sealed by applying a single liquid thermosetting silicone rubber (TSE-326, manufactured by Toshiba Silicone K. K. used), the silicone rubber being filled with iron oxide red, etc., deposits partly on the heat storage substance and because of the property of this rubber, permitting selective permeation of oxygen from the surrounding air, contact between minute amounts of oxygen and the heat storage substance occurs. Thus, the test samples including the above-mentioned factors for inducing or accelerating decomposition are formed. In addition, in order to elucidate the effect of each decomposition factor for the sample sealed on the petri dish, fused glass tube of 16 mm in dia. and 50 mm long made of the same material as the dish in which only pentaerythritol was contained was prepared and designated as Comaprison sample-2.

The samples manufactured in this way were put into a thermostat held at 230°C±2°C, taken out after a lapse of 500 hours and, then, after observing the state of discoloration of the heat storage substances, the phase transition heat (J/g) and the phase transition temperature from the radiation side were measured by a differential scanning calorimeter (Type DT-30B, manufactured by Shimazu Seisakusho). The results are shown in Tables (1) and (2), in comparison with the characteristics (initial characteristics) of the samples prior to carrying out the long heating stability test.

TABLE 1 (1)

| No. | Heat storage material composition (weight %) | | | | Initial characteristics | | | |
|---|---|---|---|---|---|---|---|---|
| | (*1) Olefinic polymer | Fluorine-resin polymer | Petroleum wax | (*4) Penta-erythritol | Heat of phase transi-tion (J/g) | Ratio of phase transition heat to that of pure penta-erythritol (%) | Ratio of the amount for storaging equal heat to the amount of pure penta-erythritol (weight ratio) | Phase transition tempera-ture (°C) |
| 1 | 1 | — | — | 99 | 268 | 99.3 | 1.01 | 177.1 |
| 2 | 5 | — | — | 95 | 268 | 99.3 | 1.01 | 177.2 |
| 3 | 10 | — | — | 90 | 250 | 92.6 | 1.08 | 177.2 |
| 4 | 30 | — | — | 70 | 225 | 83.3 | 1.2 | 177.1 |
| 5 | 50 | — | — | 50 | 170 | 63.0 | 1.59 | 177.0 |
| 6 | 70 | — | — | 30 | 100 | 37.0 | 2.7 | 177.0 |
| 7 | 80 | — | — | 20 | 65 | 24.1 | 4.15 | 177.2 |
| ** | — | — | — | 100 | 270 | — | 1.0 | 177.5 |
| *** | — | — | — | 100 | 270 | — | 1.0 | 177.5 |

(*1) Ethylene polymer: Novatex L (Trade name, manufactured by Mitsubishi Chemical Industries, Ltd.)
(*4) Pentalit M (Trade name, Koei Chemical Co., Ltd.)
**     Comparison sample No. 1 (Pentalit M)
*** Comparison sample No. 2

TABLE 1 (2)

| No. | Characteristics after 230°C×500 hr | | | | | |
|---|---|---|---|---|---|---|
| | Heat of phase transition (J/g) | Ratio of phase transition heat to that of pure penta-erythritol (%) | Phase transition temperature (°C) | Decrease in phase transition temperature (°C) | Degree of discolora-tion of the heat storage material | Judgment |
| 1 | 204 | 76.1 | 175 | 2.1 | Weak yellow | ○ |
| 2 | 215.7 | 80.5 | 176 | 1.2 | ditto | ◎ |
| 3 | 248 | 99.2 | 176.3 | 0.9 | ditto | ◎ |
| 4 | 220 | 97.8 | 176.5 | 0.6 | ditto | ◎ |
| 5 | 166 | 97.7 | 176 | 1.0 | ditto | ◎ |
| 6 | 99.4 | 99.4 | 176 | 1.0 | ditto | ◎ |
| 7 | 20 | 30.8 | 151 | 26.1 | Yellowish brown | X |
| ** | 20 | 7.4 | 120 | 57.5 | Browny resinous | X |
| *** | 130 | 48.1 | 155 | 22.5 | Brown | X |

Criterion:  ◎ Excellent    ○ Good    △ Fair    X Poor
  ** Comparison sample No. 1 (Pentalit M)
  *** Comparison sample No. 2

In the results of Table 1, the characteristics of the Comparison sample-1 containing only pentaerythritol which is measured after the stability test at 230°C and at a 500 hr long heating time showed notably inferior results, as compared with its initial characteristics, and the heat storage substances turned into a browny resinified state. Comparison sample-2 has better thermal stability than Comparison sample-1, but is not in a practically usable state. As compared with these results, Samples Nos. 1—6, though showing decreases in the heat of phase transition corresponding to the amounts of Novatek L added, give adequate results even after the 230°C×500 hr long heating stability test, and the discoloration degrees of the heat storage substance are very low. However, as the proportion of the ethylene polymer is increased to 80 weight parts, the deterioration becomes notable, thus detracting from practical use of such compositions. When these heat storage substances are put into practical uses, the greater the amount of Novatek L incorporated into the composition is, the greater is the ratio of usable heat in relation to the heat generated by pentaerythritol alone.

But this ratio is not so large as to make the material unusable. These results tell that the practically usable range of Novatek L in the heat storage substance or its mixing ratio with pentaerythritol should be 1—70 weight %, and more preferably 5—50 weight %.

(Example-B)

As paraffin wax, HNP-9 (manufactured by Nippon Seiro Co., Ltd.; melting point 65°C and carbon numbers 25—35) was used; this wax and pentaerythritol (the same product as that of Example-A) were mixed in the ratios for the total of 100 weight parts of Experiments Nos. 8—14 as shown in Table 2. Thereafter long heating stability test samples were prepared by the similar treatments as in the foregoing Example-A. These samples were put in a 230°C±2°C thermostat container and taken out later a lapse of 500 hr and after observing the state of discoloration of the heat storage substance, the heat of phase transition (J/g) of the heat discharging side and the phase transition temperature were measured. The results are shown in Table 2-(1) and 2-(2), in comparison with the initial characteristics of the respective samples. The numerical values in the columns for the ratio of the numerical values in the phase transition heat to that of

7

pure pentaerythritol (expressed as %) and for the ratio of the amount of storaging equal to the amount of pure pentaerythritol (weight ratio) in Table 2 are calculated by using the results with Comparison sample-1 in Table 1 as the references.

TABLE 2 (1)

| No. | Heat storage material composition (weight %) | | | | Initial characteristics | | | |
|---|---|---|---|---|---|---|---|---|
| | Olefinic polymer | Fluorine-resin polymer | (*3) Petroleum wax | (*4) Penta-erythritol | Heat of phase transition (J/g) | (*5) Ratio of phase transition heat to that of pure penta-erythritol (%) | (*6) Ratio of the amount for storaging equal heat to the amount of pure penta-erythritol (weight ratio) | Phase transition tempera-ture (°C) |
| 8 | — | — | 0.5 | 99.5 | 270 | 100 | 1.0 | 178 |
| 9 | — | — | 1 | 99 | 269 | 99.6 | 1.0 | 178 |
| 10 | — | — | 10 | 90 | 265 | 98.1 | 1.02 | 177.5 |
| 11 | — | — | 30 | 70 | 235 | 87.0 | 1.15 | 177.7 |
| 12 | — | — | 50 | 50 | 165 | 61.1 | 1.64 | 177.5 |
| 13 | — | — | 70 | 30 | 105 | 38.8 | 2.57 | 177 |
| 14 | — | — | 80 | 20 | 70 | 25.9 | 3.86 | 177.4 |

(*3) Paraffin wax: HNP-9 (Nippon Seiro Co., Ltd.)
(*4) Pentalit M (Koei Chemical Co., Ltd.)
(*5), (*6)  The results with comparison sample-1 in Table 1 are taken as references.

EP 0 187 966 B1

TABLE 2 (2)

| No. | Characteristics after 230°C×500 hr | | | | | |
|---|---|---|---|---|---|---|
| | Heat of phase transition (J/g) | Ratio of phase transition heat to that of pure penta-erythritol (%) | Phase transition temperature (°C) | Phase transition temperature decrease rate (°C) | Degree of discolora-tion of heat storage material | Judgment |
| 8 | 115 | 42.6 | 165 | 13 | Brown | X |
| 9 | 200 | 75.6 | 175 | 3.0 | Weak yellow | ○ |
| 10 | 260 | 98.1 | 177 | 0.5 | ditto | ◎ |
| 11 | 233 | 99.1 | 177 | 0.7 | ditto | ◎ |
| 12 | 163 | 99.1 | 177 | 0.5 | ditto | ◎ |
| 13 | 102 | 97.3 | 176 | 1.0 | ditto | ◎ |
| 14 | 30 | 42.9 | 150 | 27.4 | Yellowish brown | X |

Criterion:    ◎ Excellent    ○ Good    △ Fair    X Poor

With regard to the results of Table 2, the characteristics after a 230°C×500 hr long heating stability test for Tests Nos. 8 and 14 gave results indicating that the stability of the heat storage substance deteriorates, when the proportion of paraffin wax HNP-9 in the heat storage substance composition is less than 1% and more than 70%. The results of Experiments Nos. 8—14 indicate furthermore that the practically usable heat storage substance should have incorporated paraffin wax HNP-9 in the proportions of 1—70 weight % HNP-9, the rest being pentaerythritol.

[Example-C]

Viscol 550P (Trade name, manufactured by Sanyo Chemical Industries, Ltd.; white powder, melting point 150°C, mean molecular weight 4,000) a low molecular weight propylene polymer, Microcrystalline wax Hi-MiX-2095 (manufactured by Nippon Seiro Co., Ltd.; M.P. 96°C) a petroleum wax and pentaerythritol (the same product as in Example-A) were mixed at the ratios for the total of 100 weight parts indicated under Experiment Nos. 15—20 in Table 3, respectively. Thereafter, individual samples were put in separate glass beakers, and the long heating stability test samples were prepared by subjecting them to the similar treatments as in Example-A, while heating them at 120°C. Then the characteristics were measured by the similar methods as in Example-B. Results of the measurement are shown in Tables 3-(1) and 3-(2).

With regard to the measurement results of Table 3, the characteristics after the 500 hr long heating stability test at 230°C show, as indicated by the results of Experiment No. 20, that the heat storage substance has poor stability if the total percentage of the low molecular weight propylene polymer and of the Microcrystalline wax Hi-MiC-2095 is in excess of 70 weight %. But excellent results are obtained at the mixing ratios indicated under Experiments Nos. 15—19.

TABLE 3 (1)

| No. | Heat storage material composition (weight %) | | | | Initial characteristics | | | |
|---|---|---|---|---|---|---|---|---|
| | (*1) Olefinic polymer | Fluorine-resin polymer | (*3) Petroleum wax | (*4) Penta-erythritol | Heat of phase transi-tion (J/g) | (*5) Ratio of phase transition heat to that of pure penta-erythritol (%) | (*6) Ratio of the amount for storaging equal heat to the amount of pure penta-erythritol (weight ratio) | Phase transition tempera-ture (°C) |
| 15 | 2.5 | — | 2.5 | 95 | 267 | 98.9 | 1.01 | 176 |
| 16 | 5.0 | — | 5.0 | 90 | 248 | 91.9 | 1.09 | 177 |
| 17 | 15 | — | 15 | 70 | 220 | 81.5 | 1.23 | 177 |
| 18 | 25 | — | 25 | 50 | 166 | 62.2 | 1.63 | 177.2 |
| 19 | 35 | — | 35 | 30 | 95 | 35.2 | 2.84 | 177 |
| 20 | 40 | — | 40 | 20 | 70 | 25.9 | 3.86 | 177.2 |

(*1) Low molecular weight propylene polymer: Viscol 550p (manufactured by Sanyo Chemical Industries, Ltd.)
(*3) Microcrystalline wax Hi-Mic-2095 (manufactured by Nippon Seiro Co., Ltd.)
(*4) Pentalit M (Koei Chemical Co., Ltd.)
(*5) and (*6) The results with Comparison sample-1 in Table 1 were taken as the references.

# EP 0 187 966 B1

TABLE 3 (2)

| No. | Characteristics after 230°C×500 hr | | | | | Judgment |
|---|---|---|---|---|---|---|
| | Heat of phase transition (J/g) | Ratio of phase transition heat to that of pure penta-erythritol (%) | Phase transition temperature (°C) | Decrease in phase transition temperature (°C) | Degree of discolora-tion of the heat storage material | |
| 15 | 220 | 82.4 | 176 | 0 | Weak yellow | ◎ |
| 16 | 246 | 99.2 | 176.8 | 0.2 | ditto | ◎ |
| 17 | 218 | 99.2 | 176.5 | 0.5 | ditto | ◎ |
| 18 | 162 | 97.7 | 176.4 | 0.8 | ditto | ◎ |
| 19 | 92.9 | 97.8 | 176 | 1.0 | ditto | ◎ |
| 20 | 29.5 | 42.2 | 151.9 | 25.3 | Weak brown | X |

Criterion:   ◎ Excellent   ○ Good   △ Fair   X Poor

[Example D]

Tetrafluoroethylene resin powder M-12 (Trade name, manufactured by Daikin Industries, Ltd.; mean molecular weight more than 1 million, particle diameter approx. 0.1—10 μm), a fluorine-resin polymer HNP-9 (the same product as in Example-B) a petroleum wax and a mixture of Pentalit M (the same product as in Example-A) and Pentalit (Trade name, manufactured by Koei Chemical Co., Ltd., containing 1.6 weight % in total of dipentaerythritol and bispentaerythritol monoformal condensate) in a ratio of 1:1 were mixed in the ratios for the total of 100 weight parts as indicated under Experiments Nos. 21 and 22 in Table 4, respectively. Thereafter, the mixture was treated in the similar way as in Example-B, thereby preparing long heating stability test samples. In the following, results of characteristics measured similarly as in Example-B are shown in Tables 4-(1) and 4-(2).

12

TABLE 4 (1)

| No. | Heat storage material composition (weight %) | | | | Initial characteristics | | | |
|---|---|---|---|---|---|---|---|---|
| | Olefinic polymer | (*2) Fluorine-resin polymer | (*3) Petroleum wax | (*4) Penta-erythritol | Heat of phase transi-tion (J/g) | (*5) Ratio of phase transition heat to that of pure penta-erythritol (%) | Ratio of the amount for storaging equal heat to the amount of pure penta-erythritol (weight ratio) | Phase transi-tion tempera-ture (°C) |
| 21 | — | 5 | 25 | 70 | 229 | 84.8 | 1.18 | 178 |
| 22 | — | 25 | 25 | 50 | 166 | 61.5 | 1.63 | 178 |

(*2) Tetrafluoroethylene: M-12 (manufactured by Daikin Industries, Ltd.)
(*3) HNP-9 (The same product as in Example-b)
(*4) Pentalit M: Pentalit=1:1 Mixture
(*4) and (*5) The measurement results with Comparison sample-1 in Table 1 are taken as references.

TABLE 4 (2)

| | | | Characteristics after 230°C×500 hr | | | |
|---|---|---|---|---|---|---|
| No. | Heat of phase transition (J/g) | Ratio of phase transition heat to that of pure penta-erythritol (%) | Phase transition temperature (°C) | Decrease in phase transition temperature (°C) | Degree of discolora-tion of the heat storage material | Judgment |
| 21 | 190 | 98.3 | 177.5 | 0.5 | Weak yellow | ◎ |
| 22 | 164 | 98.6 | 177.7 | 0.3 | ditto | ◎ |

Criterion: ◎ Excellent ○ Good △ Fair X Poor

With regard to the measurement results of Table 4, all data for the characteristics measured after the 230°C, 500 hr long heating stability test, show high stability, relative to the initial characteristics, as the results given for Experiment Nos. 21 and 22 demonstrate.

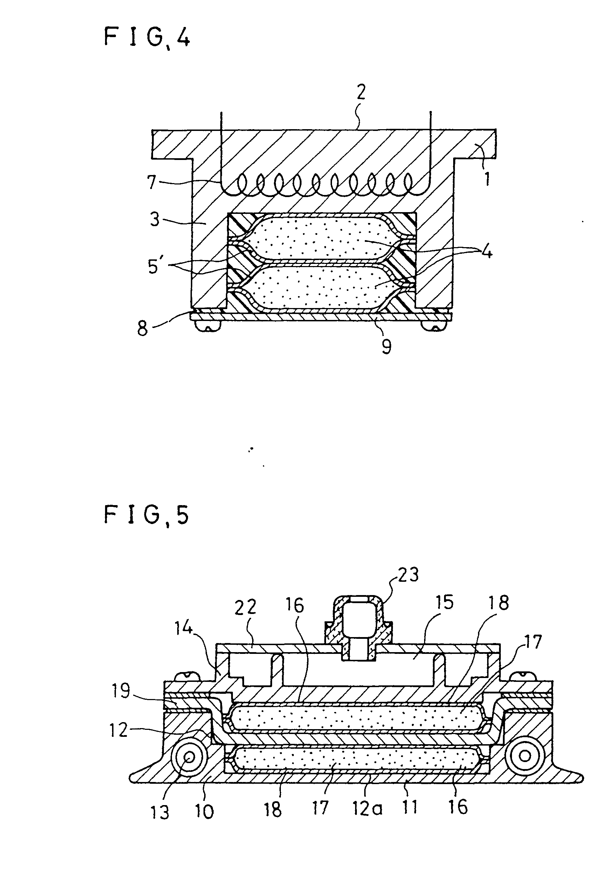

Fig. 4 shows a second embodiment of this invention. Referring to this figure 5' denotes containers each formed a bag made of 50—200 μm thick fluororesin film by way of thermal welding, in which the heat storage substance 4 is hermetically enclosed; in this example, the material 4 is provided in two superposed layers. Numeral 3 designates the housing and 7 the heating element, the housing 3 and the heating element 7 being the same as in Fig. 1. Numeral 8 designates a silicone such as silicone oil, silicone grease, silicone rubber, etc., interposed between the containers 5' and the housing 3, which not only helps to securely hold the containers 5' inside the housing 3, but also serves to upgrade thermal transfer between the containers and the housing. Numeral 9 designates a housing cover mounted on the opening of the housing 3, which helps to secure the containers 5' by mechanical pressure.

With the heat storage substance 4 being sealed in a bag shape container 5' formed of fluororesin film by thermal welding, the heat storage substance is not brought in direct contact with ambient air and the metal of the housing 3, so that such influences cannot cause a reduction of its heat storage capacity. Even when the heat storage substance 4 degrades during long-period use, the internal pressure of the containers 5' will not continue rising, thanks to the gas permeability of the fluororesin. Moreover, not only the mass production capacity is increased by forming the containers 5' from the fluororesin film, but also a cost advantage may be achieved by making use of PTFE which is an inexpensive fluororesin, though its moldability is not high. Besides, by having silicone 8 interposed between the containers 5' and the housing 3, the heat transfer between them is improved, accordingly the characteristic properties of the heat storage substance 4 have been improved thereby getting better results for the effectiveness of the heating element 7. It should be noted that if a setting liquid silicone rubber is employed as the silicone 8, securing of the containers may be perfected thus permitting use of a very simple housing cover 9.

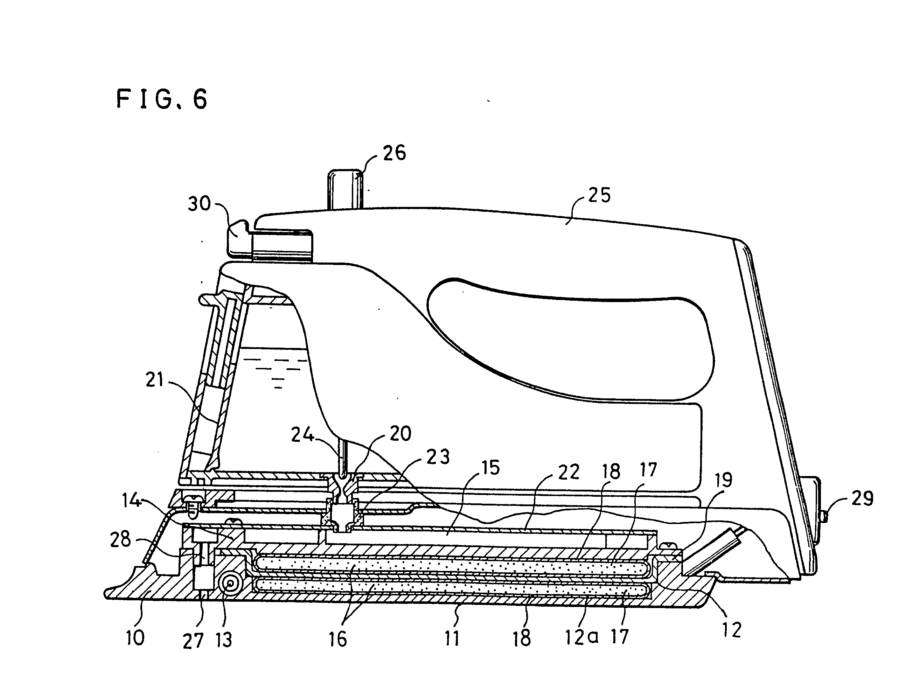

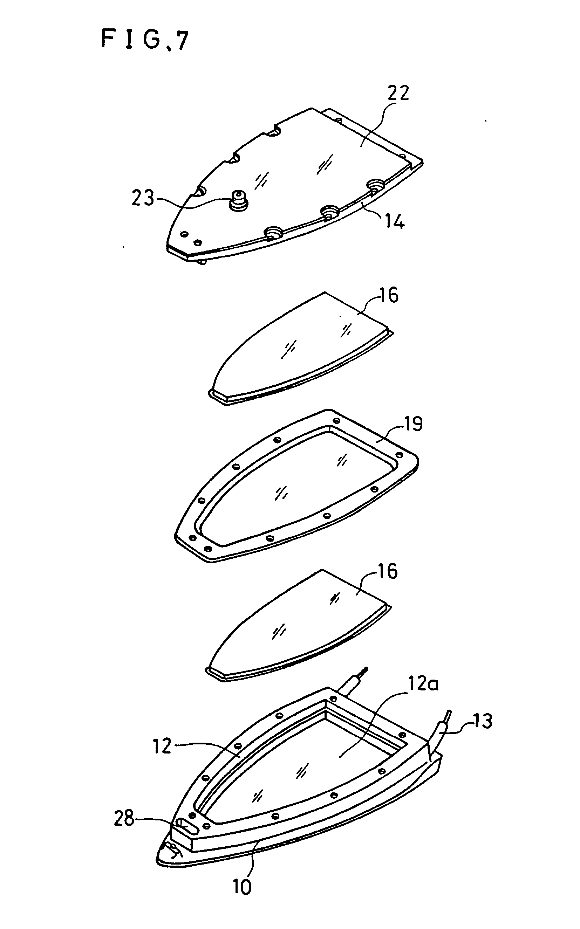

Figs 5—7 represent a third embodiment in which the heating apparatus having a heat storage device of the present invention is applied to an iron. Referring to these figures, 10 denotes the iron base provided with a heating surface 11 and a housing 12 at its upper surface, in which a heating element 13 comprising a sheathed heater is embedded. Numeral 14 designates a housing cover in which a vaporizing chamber 15 is provided integrally therewith and which has this vaporizing chamber 15 formed on its upper surface. Numeral 16 stands for a flat plate-shaped heat storage element composed of a heat storage substance 17 of pentaerythritol as its main component which is coated with a fluororesin film. Two sheets of heat storage elements 16 are laminated and are held between and in contact with the internal bottom surface 12a of the housing 12 and the inside surface of the housing cover 14 which are matched therewith. Numeral 19 is a heat transferring plate made of such a metal of high thermal conductivity as aluminum, or the like, which is not only in contact with the two heat storage elements 16, but also whose whole circumferential rim is held between the base 10 and the housing cover 14 and is thermally connected therewith. Numeral 20 shows a dripping nozzle, which is joined with the vaporizing chamber 15 through a packing 23 mounted on the vaporizing chamber cover 22 covering the top of the vaporizing chamber 15. Water in a tank 21 is supplied to the vaporizing chamber 15 through the dripping nozzle 20. Numeral 24 designates an opening-closing rod which is interlocked with a steam control button 26 located on top of the handle 25 and which is vertically movable to supply or stop water flow through the dripping nozzle 20. Numeral 27 denotes a steam ejecting port provided in the heating surface 11 of the base 10, which communicates with the vaporizing chamber 15 through a steam passage 28, through which the steam generated in the vaporizing

14

chamber 15 is ejected. Numeral 29 designates a power supply terminal which is connected with the heat 13 through a thermoregulator and which is connected with a power source to supply power therethrough. Numeral 30 designates a temperature control lever joined with the thermoregulator, which is used for making the temperature setting of the base 10.

The operation of the iron with the construction as described above is explained hereunder:

As the electric iron is energized by connecting the power source to the power supply terminal 29, the heating element 13 evolves heat, whereby the housing 12 in the base 10 and the housing cover 14 and the heat transferring plate 19 pinched therebetween are heated. At this time, the heat storage elements 16 are held between and in contact with the internal bottom surface 12a of the housing 12 and the inner surface of the housing cover 14 and are also in contact with the heat transferring plate 19. Therefore, each heat storage element 16 is heated from above and below over wide areas, so that heat be accumulated in the internal heat storage material 17 at high efficiency and in a short period. This material 17 which has stored heat starts heat discharging, after disconnecting of the power source from the power supply terminal 29. The heat is then transmitted to the base 10 and the housing cover 14 at high efficiency by the same reason as above-mentioned, thus, effectively preventing a temperature drop for a long time. Accordingly, the ironing may be performed in this state without the power supply cord. Thus hitching of clothings and restriction of the operation range by the power supply cord are avoided, whereby the operational facility is improved. For generating steam, the opening-closing rod 24 is opened by operating the steam button 26, water is supplied into the vaporizing chamber 15 from the dripping nozzle 20 through the packing 23 and the steam generated there is ejected through the steam ejecting port 27 after passing the steam passage 28. At this time, a large amount of heat will have been lost from the vaporizing chamber 15, but since the vaporizing chamber 15 is integrally formed in the housing cover 14 over a wide area, a stable supply of steam will be made available without permitting quick temperature drop. And with the vaporizing chamber 15 provided in the housing cover 14, the temperature of the bottom surface of the base 10 will not be affected by the temperature of the vaporizing chamber 15, preventing a local temperature drop on the bottom surface of the base 10 when generating steam.

In the following, the heat storage element 16 is described:

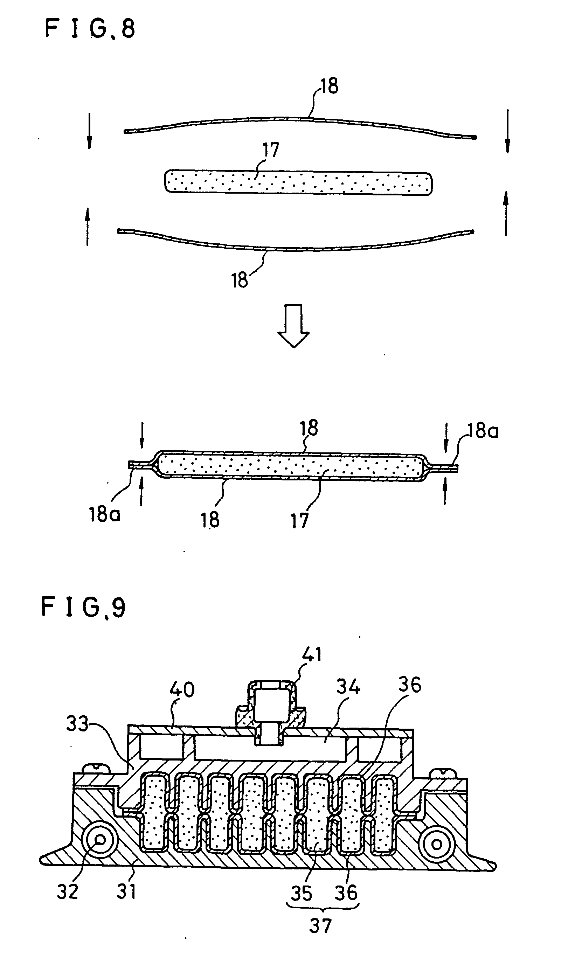

For the manufacturing of the heat storage element 16 as shown in Fig. 8, there can be used a method wherein a heat storage substance 17 is preliminarily press-formed into a plate shape and is interposed between 2 sheets of the fluororesin film 18, to be covered therewith by the whole peripheral rims 18a of the film 18 bonding to each other by way of thermal welding, etc. It is also possible to form the flat-shaped element after the heat storage substance 17 has been filled and hermetically sealed in the bag-shaped fluororesin film 18. It is only necessary that the element has the shape of a flat plate and that the material 17 is covered by the film 18. The thickness of this element 16 should desirably be less than 7 mm in view of the time required for heat conduction and heat accumulation in the heat storage substance 17.

According to an experimental example, when two sheets of 7 mm thickness of storage substance 17, totalling 100 g in weight, and covered with 50—200 μm films are incorporated into base having a 1 kW heating element 13, an approximately 20 minutes operation can be performed, using this electric iron. Generally speaking, for ordinary ironing work, the working time of 20 min is sufficient.

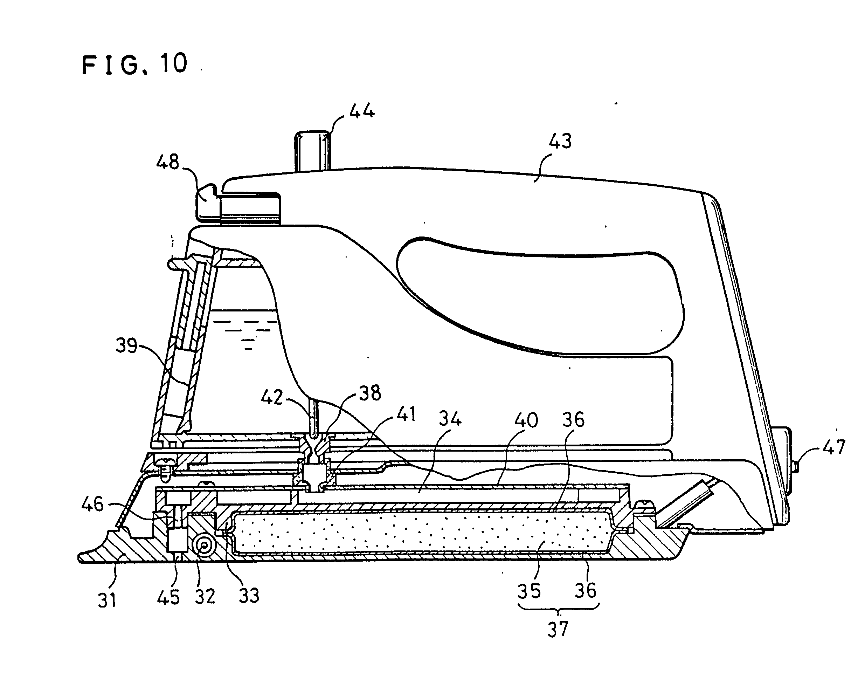

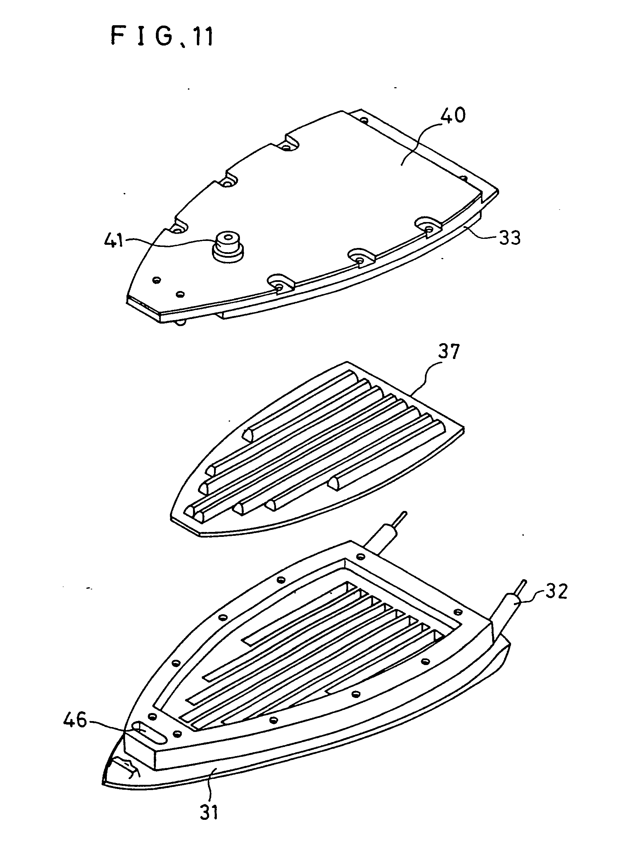

Figs. 9—11 represent a fourth embodiment in which, similarly as in the previous embodiment, the heating apparatus having a heat storage device of the present invention is applied to an electric iron.

Referring to the drawings, numeral 31 denotes a base wherein a heating element 32 is embedded. A housing 33 cover is provided integrally with a vaporizing chamber 34, each formed of aluminum die cast. Numeral 35 designates the heat storage substance comprising pentaerythritol as its main component which is filled between two sheets of the fluororesin films 36, 36 which are formed in undulated shape and hermetically sealed, thereby forming a heat storage element 37. On the top surface of the base 31 and on the bottom surface of the housing cover 33, there are provided undulations which are mated with the undulations of the heat storage element 37, so that the base 31 and the housing cover 33 securely hold the element 37 therebetween and in contact therewith. A dripping nozzle 38 is for supplying water stored in a tank 39 into the vaporizing chamber 34 and is joined to the vaporizing chamber 34 through a packing 41 mounted on the vaporizing chamber cover 40 which covers the top of the vaporizing chamber 34. An opening-closing rod 42 is provided interlocked with a steam button 44 located on the top of the handle 43, which is vertically moved to supply and stop water flow through the dripping nozzle 38. A steam ejecting port 45 is provided being located at the bottom of the base 31, which communicates with the vaporizing chamber 34 through a steam passage 46, and permits ejection of steam generated in the vaporizing chamber 34. A power supply terminal 47 is provided linked to the heating element 32 through a thermoregulator not shown in these figures and through which the power source is connected to the heater to supply the power. A temperature control lever 48 is provided being joined with the thermoregulator which is used for setting the temperature of the base 31.

The operation of this electric iron is as follows:

When the iron is energized by connecting a power source to the power supply terminal 47, the heating element 32 evolves heat, whereby the base 31 and the housing cover 33 are heated. At this time, the heat storage element 37, which is pinched between and in contact with the base 31 and the housing cover 33, mated undulatorily therewith, is heated through wide areas of both top and bottom surfaces, so that the heat is accumulated in the heat storage substance 35 at high efficiency and in a short time. The heat storage substance in which heat has been accumulated will start heat discharging, when the power source is disconnected from the power supply terminal 47, and this heat will be transmitted at high efficiency to the base 31 and the housing cover 33 as explained above, thereby preventing a temperature drop and retaining the ironing temperature for a long time. Accordingly, it becomes possible to conduct ironing in this state, and hitching of power supply cord on clothings or restriction of the operation range due to the use of the power supply cord is prevented, and as a result, its operational facility is enhanced. Generation of steam is effected when opening the opening-closing rod 42 by operating the steam button 44. Then, water is supplied from the dripping nozzle 38 to the vaporizing chamber through the packing 41, and the steam produced there is ejected through the steam ejection port 45 after passing through the steam passage 46. At this time, a large amount of heat will have been lost from the vaporizing chamber, but since the vaporizing chamber is formed in the housing cover 33 over a wide area and integrally therewith, abrupt temperature drop will not take place, thereby assuring stable steam supply for a long time. Besides, with the vaporizing chamber 34 mounted in the housing cover 33, the temperature of the bottom surface of the base 31 is not affected by the temperature of the vaporizing chamber 34 and a local temperature drop at the bottom surface of the base 31 at the time of steam generation is prevented.

In the first through fourth embodiments as hereabove described, apparatuses are described in each of which the heat storage element comprises the heat storage substance consisting mainly of pentaerythritol sealed in a container made of a fluororesin, which itself is contained in a housing. Hereafter apparatuses of a type are described, in which a fluororesin coating is formed on the internal surface and the opening peripheral rim of the housing.

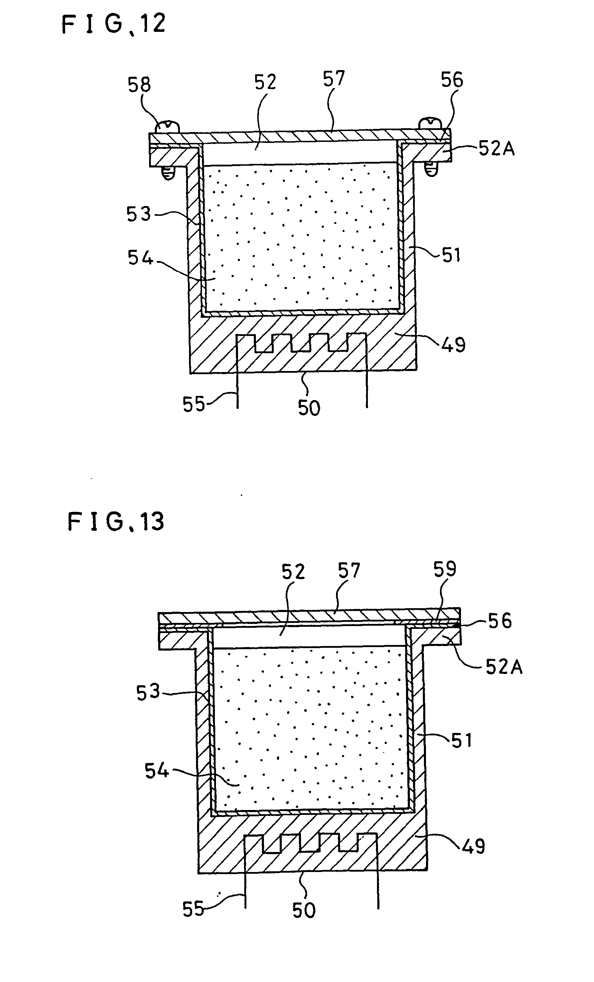

Fig. 12 gives a fifth embodiment of this invention. Referring to this figure, a base 49 has the heating surface 50 at its bottom and the housing 51 at its top. On the internal surface of the housing 51, fluororesin coating 53 of about 15 µm—5 mm thickness is formed. A heat storage substance 54 containing pentaerythritol as its main component is filled into the housing 51 through the opening 52. A heating element 55 is for heating the heat storage substance 54. On the opening peripheral rim 52A, a fluororesin coating 56 is formed and on its surface, the housing cover 57 is pressed in contact therewith by means of screws 58, thereby sealing the opening 52.

As described hereabove, by forming a fluororesin coating 53 which is inert to pentaerythritol on the internal surface of the housing 51, the effect of metal on the heat storage substance 54 may be prevented. And at the same time, the fluororesin film 56 is formed on the opening peripheral rim 52A, which shows the elasticity as a resin even at high temperatures. The fluororesin film 56 keeps the hermetic closure between the rim and the housing cover 57, thus preventing ambient air from entering into the housing 51 and thereby affecting the durability of the heat storage substance 54.

Fig. 13 shows a sixth embodiment of the present invention. In this apparatus, not only a fluororesin coating 56 is formed on the opening peripheral rim 52A of the housing 51, but also another fluororesin coating 59 is formed also on the housing cover 57; and by welding these fluororesin coatings 56 and 59 to each other the opening 52 is sealed. As a result of the construction, the opening peripheral rim 52A and the cover member 57 may be securely enclosed without using any screws, etc. It should be noted that although the fluororesin film 59 should preferably be provided all over the cover member 57, it is proper to provide it only to the part facing the opening peripheral rim 52A, as shown in the figure.

In the aforementioned first through sixth embodiment, as specifically examples of the heating apparatuses having a heat storage device of the present invention, only electric irons are described as examples for the appliances having the storage device. But the heat storage device according to the invention can be applied in many appliances. For instance, if it is applied to an electric pan, the pan can be disconnected from the power source and carried to the table after being energized for cooking in a kitchen, so that hot and delicious cooked foods can be tasted without allowing them to cool while taking the meal. Another effect obtained by adding the heat storage device is that, even if low-temperature food materials are put in a pan, during the energization and cooking, the temperature does not drop hence the cooking time is not prolonged. Furthermore, if for example, this invention is applied to hot-plates, improvement in the temperature distribution on the heating surface is possible, and besides, by applying it in heating apparatuses for keeping warm trays, tempura pans, electric pots, etc., upgrading of heating characteristics and enhancement of facility due to cordless operation may be achieved.

As hereabove described, the present invention provides a highly durable and safe heating apparatus having an excellent heat storage device wherein a heat storage substance comprising pentaerythritol as its main component is contained in a housing provided in a base formed of a metal, such that the heat storage substance is not only isolated from the housing, but also circulation of ambient air is shut off, whereby the decrease of the heat storage capacity of pentaerythritol is prevented and also abnormal rising of internal pressure in the container for the heat storage substance is prevented even during long periods of use.

## Claims

1. Heating apparatus for a heat storage device and a heating element, comprising:

(A) a metal body provided with a housing wherein is located a heat storage device consisting of

(a) a heat decomposable heat storage substance comprising 30—99% by weight of pentaerythritol and 70—1% by weight of a composition comprising

(1) a polymer in an amount of less than 70% by weight comprising at least one member selected from the group consisting of olefinic polymers and fluorine-resin polymers, and

(2) a petroleum wax having a carbon number of at least 16 in an amount of less than 70% by weight,

(b) a container made of fluororesin material completely enclosing said heat storage substance, isolating it from said metal body and preventing contact of it with ambient air, whereby said container of fluororesin is permeable to the gases due to decomposition of said heat storage substance during use of the apparatus, and

(B) a heating element incorporated in said metal body.

2. A heating apparatus having a heat storage device in accordance with Claim 1 wherein said olefinic polymer is at least one member selected from a group consisting of ethylene polymer, propylene polymer and methylpentene polymer, and said fluorine-resin polymer is at least one member selected from a group consisting of tetrafluoroethylene polymer, tetrafluoroethylene-perfluoralkyl-vinyl ether copolymer, tetrafluoroethylene-hexafluoropropylene copolymer, tetrafluoroethylene-ethylene copolymer and vinylidene fluoride polymer.

3. A heating apparatus having a heat storage device in accordance with Claim 1, wherein the petroleum wax is at least one member selected from the group consisting of paraffin waxes, microcrystalline waxes and petrolatum which have a carbon number of at least 16.

4. A heating apparatus having a heat storage device in accordance with Claim 1, wherein said container is a fluororesin container disposed in the housing and sealing said heat storage substance therein.

5. A heating apparatus having a heat storage device in accordance with Claim 4, wherein a silicone material is interposed between said container and said housing.

6. A heating apparatus having a heat storage device in accordance with Claim 1, wherein said housing includes an opening closed by a removable housing cover having therein a vaporizing chamber.

7. A heating apparatus having a heat storage device in accordance with Claim 4, wherein said housing includes an internal bottom surface and a top opening closed by a removable housing cover, and a plurality of flat plate-shaped heat storage elements each having a heat storage substance enclosed in a container made of fluororesin film which storage elements are securely held between and in contact with said internal bottom surface and the inner face of said cover.

8. A heating apparatus having a heat storage device in accordance with Claim 7, wherein the storage elements are stacked and at least one heat transferring plate is in direct or by means of a heat conductive material in indirect thermal contact with at least one of the base and the housing cover, which heat transferring plate is provided between respective heat storage elements.

9. A heating apparatus having a heat storage device in accordance with Claim 7, wherein the container is formed in an undulated shape and is securely pinched between and in contact with the housing and the housing cover which mate with the undulations of the container.

10. A heating apparatus having a heat storage device in accordance with Claim 1, wherein the housing has an opening with a peripheral rim and the container comprises a fluororesin coating formed on the inside surface of said housing and the housing includes a removable housing cover mounted on said rim to seal said opening.

11. A heating apparatus having a heat storage device in accordance with Claim 10, wherein the fluororesin coating is formed on at least the part of the housing cover which abuts on the opening peripheral rim of the housing.

## Patentansprüche

1. Heizvorrichtung mit einer Wärmespeichereinrichtung und einem Heizelement, umfassend:

(A) einem mit einem Gehäuse versehenen Metallkörper, in welchem eine Wärmespeichereinrichtung angeordnet ist, bestehend aus

(a) einer in der Wärme zur Zersetzung neigenden Wärmespeichersubstanz, umfassend 30 bis 99 Gewichtsprozent Pentaerythrit und 70 bis 1 Gewichtsprozent einer Zusammensetzung, enthaltend

(1) ein Polymer in einer Menge von weniger als 70 Gewichtsprozent, umfassend mindestens einen Vertreter, ausgewählt aus der Gruppe, bestehend aus olefinischen Polymeren und Fluorpolymerharzen, und

(2) ein Erdölwachs mit einer Kohlenstoffzahl von mindestens 16 in einer Menge von weniger als 70 Gewichtsprozent,

(b) einem Behälter aus Fluorharz material, der die genannte Wärmespeichersubstanz vollständig umschließt, sie von dem genannten Metallkörper isoliert und verhindert, daß sie mit Außenluft in Berührung kommt, wobei dieser Behälter aus Fluorharz für die Gase, die bei der Zersetzung der genannten Wärmespeichersubstanz während des Betriebs der Vorrichtung entstehen, durchlässig ist, und

(B) ein Heizelement, das in den genannten Metallkörper integriert ist.

2. Eine Heizvorrichtung mit einer Wärmespeichereinrichtung nach Anspruch 1, in welcher das genannte olefinische Polymer mindestens ein Vertreter ist, ausgewählt aus einer Gruppe bestehend aus Äthylenpolymer, Propylenpolymer und Methylpentenpolymer, und das genannte Fluorpolymerharz mindestens ein Vertreter ist, ausgewählt aus einer Gruppe bestehend aus Tetrafluoräthylenpolymer, Tetrafluoräthylen-perfluoralkylvinyläthercopolymer, Tetrafluoräthylen-hexafluorpropylencopolymer, Tetrafluoräthylen-äthylencopolymer und Vinylidenfluoridpolymer.

3. Eine Heizvorrichtung mit einer Wärmespeichereinrichtung nach Anspruch 1, in welcher das Erdölwachs mindestens ein Vertreter ist, ausgewählt aus der Gruppe bestehend aus Paraffinwachsen, mikrokristallinen Wachsen und Petrolatum, welche eine Kohlenstoffzahl von mindestens 16 aufweisen.

4. Eine Heizvorrichtung mit einer Wärmespeichereinrichtung nach Anspruch 1, in welcher der genannte Behälter ein Fluorharz-Behälter ist, der in dem Gehäuse angeordnet ist und die genannte Wärmespeichersubstanz darin abdichtet.

5. Eine Heizvorrichtung mit einer Wärmespeichereinrichtung nach Anspruch 4, in welcher sich zwischen dem genannten Behälter und dem genannten Gehäuse ein Silikonmaterial befindet.

6. Eine Heizvorrichtung mit einer Wärmespeichereinrichtung nach Anspruch 1, in welcher das genannte Gehäuse eine Öffnung aufweist, die von einem entfernbaren Gehäusedeckel mit einer Verdampfungskammer geschlossen wird.

7. Eine Heizvorrichtung mit einer Wärmespeichereinrichtung nach Anspruch 4, in welcher das genannte Gehäuse eine innere Bodenfläche und eine Öffnung am Kopfende aufweist, die von einem entfernbaren Gehäusedeckel geschlossen wird, und eine Mehrzahl von flachen plattenförmigen Wärmespeicherelementen, von denen jedes eine in einem Behälter aus einem Fluorharzfilm eingeschlossene Wärmespeichersubstanz enthält, welche Speicherelemente fest zwischen und in Berührung mit der genannten inneren Bodenfläche und der Innenfläche des genannten Deckels gehalten sind.

8. Eine Heizvorrichtung mit einer Wärmespeichereinrichtung nach Anspruch 7, in welcher die Speicherelemente aufeinandergestapelt sind und mindestens eine Wärmeübertragungsplatte in direktem oder, mittels eines wärmeleitenden Materials, in indirektem thermischen Kontakt mit mindestens entweder dem Gehäuseboden oder dem Gehäusedeckel ist, welche Wärmeübertragungsplatte zwischen entsprechenden Wärmespeicherelementen vorgesehen ist.

9. Eine Heizvorrichtung mit einer Wärmespeichereinrichtung nach Anspruch 7, in welcher der Behälter eine gewellte Form aufweist und fest zwischen und in Berührung mit dem Gehäuse und dem Gehäusedeckel eingeklemmt ist, welche an die Wellenform des Behälters angepßt sind.

10. Eine Heizvorrichtung mit einer Wärmespeichereinrichtung nach Anspruch 1, in welcher das Gehäuse eine Öffnung mit einem Umfangsrand aufweist und der Behälter eine Fluorharzbeschichtung an der Innenfläche des genannten Gehäuses aufweist und das Gehäuse einen entfernbaren Gehäusedeckel aufweist, der auf dem genannten Rand befestigt ist, um die Öffnung abzudichten.

11. Eine Heizvorrichtung mit einer Wärmespeichereinrichtung nach Anspruch 10, in welcher die Fluorharzbeschichtung an mindestens dem Teil des Gehäusedeckels vorhanden ist, der an den Umfangsrand der Öffnung des Gehäuses angrenzt.

**Revendications**

1. Appareil de chauffage avec un dispositif de stockage de la chaleur et un élément chauffant, comprenant:

(A) un corps métallique comportant un logement dans lequel se trouve un dispositif de stockage de la chaleur constitué:

(a) d'une substance de stockage de la chaleur, pouvant être décomposée par la chaleur, comprenant de 30 à 99% en poids de pentaérythritol et de 70 à 1% en poids d'une composition comportant:

(1) un polymère suivant une quantité inférieure à 70% en poids comprenant au moins un élément choisi dans le groupe constitué des polymères d'oléfine et des polymères de fluor-résine, et

(2) une cire de pétrole ayant un nombre de carbone d'au moins 16 dans une quantité inférieure à 70% en poids,

(b) d'un conteneur en fluororésine enfermant complètement la substance de stockage de la chaleur, l'isolant du corps métallique et empêchant son contact avec l'air ambiant, d'où il résulte que le conteneur en fluororésine est perméable aux gaz dus à la décomposition de la substance de stockage de la chaleur pendant l'utilisation de l'appareil, et

(B) un élément chauffant incorporé dans le corps métallique.

2. Appareil de chauffage comportant un dispositif de stockage de la chaleur selon la revendication 1, dans lequel:

le polymère d'oléfine est au moins un élément choisi dans le groupe constitué d'un polymère d'éthylène, d'un polymère de propylène et d'un polymère de méthylpentène, et le polymère de fluor-résine est au moins un élément choisi dans le groupe constitué d'un polymère de tétrafluoroéthylène, d'un copolymère de tétrafluoroéthylène-perfluoroalkyl-éther de vinyle, d'un copolymère de tétrafluoroéthylène-hexafluoropropylène, d'un copolymère de tétrafluoroéthylène-éthylène et d'un polymère de fluorure de vinylidène.

3. Appareil de chauffage comportant un dispositif de stockage de la chaleur selon la revendication 1, dans lequel:

la cire de pétrole est au moins un élément choisi dans le groupe constitué des cires de paraffine, des cires microcristallines et du pétrolatum qui ont un nombre de carbone d'au moins 16.

4. Appareil de chauffage comportant un dispositif de stockage de la chaleur selon la revendication 1, dans lequel:

le conteneur est un conteneur en fluororésine disposé dans le logement et rendant étanche la substance de stockage de la chaleur qu'il contient.

5. Appareil de chauffage comportant un dispositif de stockage de la chaleur selon la revendication 4, dans lequel:

un matériau en silicone est interposé entre le conteneur et le logement.

6. Appareil de chauffage comportant un dispositif de stockage de la chaleur selon la revendication 1, dans lequel:

le logement comporte une ouverture fermée par un couvercle amovible comprenant une chambre de vaporisation.

7. Appareil de chauffage comportant un dispositif de stockage de la chaleur selon la revendication 4, dans lequel:

le logement comprend une face inférieure interne et une ouverture fermée par un couvercle amovible, et

une multitude d'éléments de stockage de la chaleur sous forme de plaques plates, chacun ayant une substance de stockage de la chaleur enfermée dans un conteneur en pellicule de fluororésine, éléments de stockage qui sont fixés solidement entre la surface inférieure interne et la face intérieure du couvercle en étant en contact avec elles.

8. Appareil de chauffage comportant un dispositif de stockage de la chaleur selon la revendication 7, dans lequel:

les éléments de stockage sont empilés et au moins une plaque de transfert de la chaleur est en contact direct, ou au moyen d'un matériau conducteur de la chaleur en contact thermique indirect, avec au moins la base ou le couvercle du logement, plaque de transfert de la chaleur qui est prévue entre des éléments respectifs de stockage de la chaleur.

9. Appareil de chauffage comportant un dispositif de stockage de la chaleur selon la revendication 7, dans lequel:

le conteneur a une forme ondulée et est serré solidement entre le logement et le couvercle du logement en étant en contact avec eux, lesquels sont appariés aux ondulations du conteneur.

10. Appareil de chauffage comportant un dispositif de stockage de la chaleur selon la revendication 1, dans lequel:

le logement comporte une ouverture avec un pourtour périphérique et le conteneur comprend un revêtement en fluororésine formé sur la surface intérieure du logement et le logement comporte un couvercle amovible monté sur le pourtour de manière à rendre étanche ladite ouverture.

11. Appareil de chauffage comportant un dispositif de stockage de la chaleur selon la revendication 10, dans lequel:

le revêtement en fluororésine est formé sur au moins la partie du couvercle du logement qui est en aboutement avec le pourtour périphérique de l'ouverture du logement.

FIG.1

FIG.2

F I G、3

Gas ($O_2$) permeability $\left[\dfrac{cc \cdot cm}{cm^2 \cdot sec \cdot cmHg}\right]$

$10^{-8}$      $10^{-6}$      $10^{-4}$

Polyamide

Polyimide

Silicone rubber

Fluororesin

EP 0 187 966 B1

EP  0 187 966  B1

F I G. 4

F I G. 5

3

FIG. 6

# FIG.7

F I G. 8

F I G. 9

FIG. 10

EP 0 187 966 B1

F I G、11

FIG. 12

FIG. 13